# EUROPEAN PATENT SPECIFICATION

(11) **EP 2 524 529 B1**
(45) Date of publication and mention of the grant of the patent: **09.09.2020**
(21) Application number: 10701739.4
(22) Date of filing: 13.01.2010
(51) Int. Cl.: H04W 8/22, H04W 8/24, H04W 4/029, H04W 84/18, H04W 88/06

(54) **METHODS AND ARRANGEMENTS FOR SUPPORTING AD HOC NETWORKING BETWEEN USER EQUIPMENTS IN A CELLULAR NETWORK**
VERFAHREN UND ANORDNUNGEN IN EINEM MOBILFUNKNETZ
PROCÉDÉS ET AGENCEMENTS DANS UN RÉSEAU CELLULAIRE

(43) Date of publication of application: 21.11.2012
(73) Proprietor: Telefonaktiebolaget LM Ericsson (publ), 164 83 Stockholm (SE)
(72) Inventor: FODOR, Gabor, S-165 52 Hässelby (SE); KAZMI, Muhammad, S-167 39 Bromma (SE)
(74) Representative: Zacco Sweden AB
(86) International application number: PCT/SE2010/050024
(87) International publication number: WO 2011/087408

(56) References cited:
- EP-A1- 1 333 627
- WO-A1-01/15387
- US-A1- 2009 319 613

## Description

### TECHNICAL FIELD

The present invention relates to ad hoc networking in a cellular network. More particularly, the present invention relates to a network node, a user equipment and a method of supporting ad hoc networking between user equipments of a cellular network.

### BACKGROUND

The Universal Mobile Telecommunication System (UMTS) is one of the third generation mobile communication technologies designed to succeed GSM. 3GPP Long Term Evolution (LTE) is a project within the 3^{rd} Generation Partnership Project (3GPP) to improve the UMTS standard to cope with future requirements in terms of improved services such as higher data rates, improved spectrum and energy efficiency, lowered costs etc. The Universal Terrestrial Radio Access Network (UTRAN) is the radio access network of a UMTS and evolved UTRAN (E-UTRAN) is the radio access network of an LTE system.

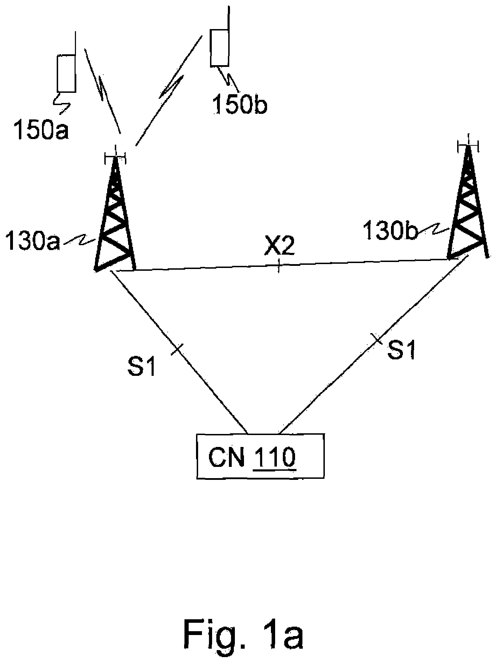

In an E-UTRAN, illustrated in **Figure 1a****,** user equipments (UE) 150a-b are wirelessly connected to evolved radio base stations (RBS) 130a-b commonly referred to as eNodeBs (eNB) and sometimes casually as wireless access points. The eNBs 130a-b are directly connected to the core network (CN) 110 via the S1 interface, and are also connected to each other via the X2 interface. In UTRAN however, the radio base stations or NodeBs (NB) are connected to the CN via a Radio Network Controller (RNC) which controls the NBs connected to it. The UEs may thus communicate with each other using the infrastructure described above.

In their simplest forms, wireless ad hoc networks consist of independent wireless nodes that dynamically form connections with each other to create a network. In a so called infrastructure-less mode, an ad hoc network does not require any central infrastructure such as an UMTS or LTE system, and may grow or shrink "on its own" using distributed algorithms implemented in the ad hoc network nodes based on state of the art discovery mechanisms and individual node decisions. In order for the wireless nodes to form ad hoc networks, there is a need for a standardized set of protocols that allows nodes to communicate, and specifically for an authentication procedure that facilitates establishing secure communication links within the ad hoc network.

Ad hoc networks can be formed using many different wireless technologies, and Bluetooth is one of the most common. Bluetooth ad hoc networks may use the Secure Simple Pairing (SSP) protocol to exchange messages that are necessary for device discovery, connection establishment and exchanging public security keys. In addition, SSP allows for the so called input/output (I/O) capability exchange that contains rudimentary information about the nodes physical communication capabilities.

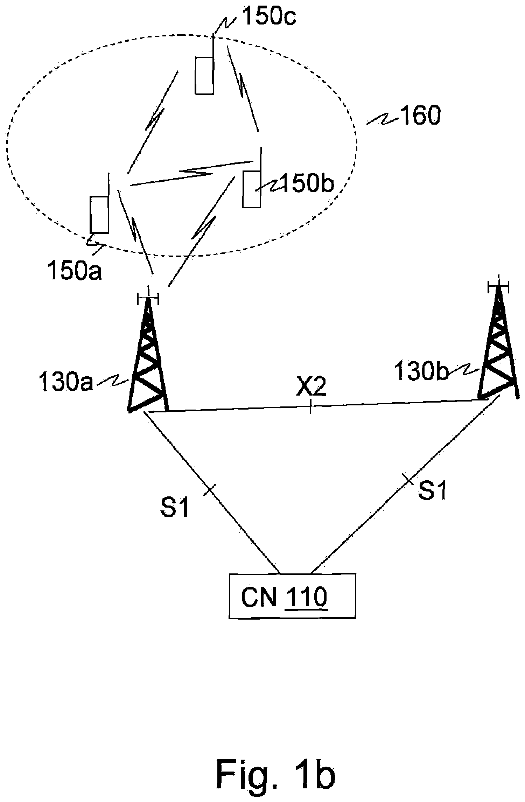

In future wireless networks, different types of UEs may want to form wireless ad hoc networks while connected to a cellular network, as schematically illustrated in **Figure 1b****.** Cellular phones, laptops, devices with wireless interfaces, and personal area networks (PANs) 150a-c should thus be able to form ad hoc networks 160 and exchange information in order to provide services to one another. For example, in a file download (client-server or peer-to-peer) application, UEs may form an ad hoc network in order to exchange large audio and video files and other digital content. In a real time application, user equipments in the proximity of a wireless access point or an RBS may act as relaying nodes towards other UEs that are farther away from the access point or RBS and that are interested in receiving, for example, certain radio or television programs or other audio or video contents. Recognizing these demands, an E-UTRAN that supports both the common wireless communication service based on UE to network communication, and the ad hoc network service based on peer-to-peer (P2P) UE to UE communication is being specified in the standardization bodies. This kind of system will hereinafter be referred to as an ad hoc network in an infrastructure mode.

Introducing ad hoc capabilities into the UMTS standards suite facilitates new services based on P2P relationships between users. In this P2P environment, not only cellular operators offer wireless services to subscribers, but subscribers can also offer services to one another, provided that supply and demand for such services find one another. For example, customers visiting an airport may offer or seek pod radio, gaming, file distribution and other P2P services to/from interested peers.

Document EP1333627 discloses a terminal identifier univocally identifying a terminal in the cellular radio communication network being stored in a database of an entity of the cellular radio communication network together with an information on the localization of the terminal as well as with an identifier of the short-range wireless interface univocally identifying the terminal among all devices supporting a similar short-range wireless interface. Then, the entity of the cellular radio communication network is able to perform database checks to detect by means of localization information if two terminals registered in the database are close enough for being able to set up a direct short-range communication. If it is the case, the entity triggers the transmission of a message to the two potential communication partners containing the identifier of the counterpart's short-range; wireless communication interface. J

In existing wireless ad hoc standards and solutions, there is a limited support for exchanging wireless node capabilities, such as capabilities related to antenna configuration, supported frequency bands, carrier aggregation, positioning, etc., as current wireless ad hoc solutions are homogeneous in terms of UE capabilities. Current solutions are based on beacon signals and HELLO messages designed for an infrastructure-less mode of ad-hoc networks, and these message-based advertisements are resource inefficient for scenarios in which UEs with cellular as well as ad hoc capabilities are present, and where the UEs may be heterogeneous in terms of capabilities.

As mentioned above, UEs will probably be able to exchange a much broader range of services to one another in future infrastructure mode ad hoc networks, in analogy with today's multi-RAT networks allowing UEs of diverse capabilities to receive a wide range of services. However, UEs willing to form an ad hoc network, either because of being interested in receiving a certain service or supplying a certain service, need to be compatible in terms of capabilities in order to communicate in a spectrum and energy efficient manner, or even to be able to communicate at all. For instance, UEs equipped with multiple antennas and supporting closed loop multiple-input multiple-output (MIMO) mode switching, antenna selection and MIMO rank adaptation should be able to utilize these capabilities when being in an ad hoc network. Indeed, the success of ad hoc networks in an infrastructure mode will depend on the ability of such compatible UEs to find each other and operate in compatible modes in order to demand and supply various services.

If UEs with incompatible capabilities were able to form ad hoc networks with each other, then incompatible UEs would spend spectrum resources trying to form ad hoc networks with each other although it would never lead to any service exchange at the end. For example if UEs with incompatible audio/video coding/decoding capabilities form ad hoc networks, they are unable to exchange audio/video content with each other.

Therefore, the UEs will need to advertise their own capabilities in order to find other compatible UEs with similar capabilities among all the different types of UEs. However, broadcasting such information to all UEs would require excessive energy and spectrum resources. To summarize, a problem in infrastructure mode ad hoc networks is to find mechanisms that ensure that compatible or "capable" UEs can find each another in a signaling resource efficient way, such that a spectrum and energy efficient ad hoc network communication and exchange of services can take place. Specifically, a problem for UEs participating in an ad hoc network is to find which radio access technology (RAT), frequency band, carrier frequencies, modulation and coding technique (e.g. OFDM or single carrier FDM), duplex method (e.g. frequency division duplex or time division duplex) and other capabilities they should use in order to be compatible with other nodes participating in the ad-hoc network.

In the following paragraphs, more detailed information regarding some different types of UE capabilities is provided. It should be noted that different types and categories of capabilities can be combined in a single UE. For instance a high end UE may support contiguous carrier aggregation both in uplink and downlink along with MIMO and an interference cancellation receiver.

### 3GPP Defined UE Categories

In modern wireless cellular systems a wide range of UE categories, each associated with a set of capabilities, are used. For example, in the 3GPP LTE system five UE categories are specified in release 8 and more categories are being introduced in subsequent releases as part of LTE evolution. UE categories define parameters related to the downlink and uplink physical layer such as the maximum number of supported layers for spatial multiplexing, supported buffer sizes, measurement capabilities, robust header compression capabilities and many other functions.

### Multi-band and Multi-RAT UE Capabilities

Most of the UEs today support multiple frequency bands even for the same radio access technology (RAT). This is driven by the interest from service providers, as a single service provider may own carriers in different bands and would like to make efficient use of carriers by performing load balancing on different carriers. A well known example is that of a multi-band GSM terminal with 800/900/1800/1900 MHz bands.

Furthermore, according to the 3GPP standard, the UE may also support multiple RATs including both 3GPP and non 3GPP (e.g. 3GPP2 or IEEE) technologies. For example, any allowed combination of the following technologies are supported in terms of inter-working procedures and performance requirements: GSM, UTRAN FDD (Frequency Division Duplex), UTRAN TDD (Time Division Duplex), E-UTRAN FDD, E-UTRAN TDD, HRPD (High Rate Packet Data) and cdma2000.

A multi-RAT UE may also support cellular and non cellular technologies e.g. WCDMA and Wireless LAN (WLAN) and/or Bluetooth or LTE and digital broadcast TV. As of today, no inter-working procedures are specified in any standard to support mobility between 3GPP technologies and WLAN. However, in such UE the independent and also parallel operation of multiple technologies would still be possible. For instance UEs capable of supporting GSM and WLAN could be used for voice services using GSM and for data services (e.g. browsing) using WLAN.

According to the 3GPP standard, all UTRA and E-UTRA bands are common. However different bands may be used in different regions, e.g. 700 MHz band (UTRA Frequency Division Duplex (FDD)/E-UTRA FDD band 13), which is specified in 3GPP specifications (3GPP TS 36.101 and TS 25.101 for LTE and UTRA FDD respectively), is used only in US. Nonetheless, certain bands are universal or at least widely allocated in most parts of the world. The 2100 MHz band (UTRA FDD/E-UTRA FDD band 1) e.g. is used in most part of the world except the Americas. The exact UE multi-band and/or multi-RAT capabilities are highly driven by the local market demand. For instance the RATs and/or bands supported by the UEs manufactured and sold for the US market would differ to some extent compared to those meant for the market in China. On the other hand certain technologies such as WCDMA and LTE, which are or eventually will be universally deployed, could be supported by a large number of UEs. However their frequency bands of operation could still differ. The frequency bands 800 MHz (UTRA FDD/E-UTRA FDD band 5) and 1900 MHz (UTRAFDD/E-UTRA FDD band 2) are for instance available in US, while bands 900 MHz (UTRAFDD/E-UTRA FDD band 8) and 1800 MHz (UTRAFDD/E-UTRA FDD band 3) are assigned in most parts of the world excluding primarily US and Japan.

### Carrier Aggregation Capabilities

The carrier aggregation capability allows a UE to simultaneously receive and/or transmit over multiple carriers. This may lead to a manifold increase in the data rate. The feature of carrier aggregation is currently being standardized for both HSPA (High Speed Packet Access) and LTE advanced. The carrier aggregation can be categorized as contiguous or non contiguous. The latter one can be further sub-divided into intra-band and inter-band (or multi-band). The contiguous carrier aggregation capable UE is able to receive data over multiple adjacent carriers simultaneously. On the other hand, the multi-band carrier aggregation capability allows a UE to simultaneously receive and transmit data over carriers belonging to different bands e.g. bands 900 MHz and 1800 MHz. Carrier aggregation is also possible in the uplink, requiring UEs to be capable of transmitting data simultaneously over multiple carriers.

In HSPA release 8 the downlink contiguous carrier aggregation over two adjacent UTRA FDD carriers has been introduced. In HSPA release 9 the agreed downlink multi-band carrier aggregation scenarios include: 850MHz/2100MHz, 900MHz/2100MHz and 1900MHz/1700MHz. More carrier aggregation scenarios will be introduced in future HSPA releases. For LTE, several multi-band carrier aggregation scenarios have been agreed for further evaluation. Altogether there are 12 different agreed scenarios corresponding to 12 different UE capabilities. Among these agreed scenarios there even exists aggregation of three carriers belonging to three different bands, e.g. 1800 MHz/2100 MHz/2600 MHz.

### Antenna Transmission and Reception Capabilities

Another set of capabilities includes the antenna transmission modes such as MIMO, cyclic delay diversity, beam forming, cyclic delay diversity, transmit diversity etc. The E-UTRAN release 8 supports seven such antenna transmission modes. Similarly, transmit diversity schemes and MIMO schemes also exist in UTRAN. Furthermore, there is also support for different receiver capabilities. In UTRAN for instance, four different types of UE receiver capabilities are specified, such as receiver diversity, and receiver diversity with inter-cell interference cancellation.

### Positioning Method Capabilities

Positioning services have become extremely popular and they are expected to benefit from P2P service provisioning by facilitating new innovative services. For example, an airline company may announce to waiting passengers in an airport that a P2P poker game takes place at a gate at a certain time offering bonus points to the winner. As another example, high end UEs with accurate positioning information may provide a positioning service in a city centre or in a large exhibition area to other UEs with less accurate or no positioning capability.

Positioning methods can be broadly categorized into satellite based and terrestrial methods, which are further described below.

### Satellite Based Positioning Methods

Global Navigation Satellite System (GNSS) is the standard generic term for satellite navigation systems that enable a user to determine its position and acquire other relevant navigational information. The global positioning system (GPS) and the European Galileo positioning system are well known examples of GNSS. However, only GPS is currently in commercial operation, and has been so for more than a decade. The GPS comprises of a constellation of 24 to 32 medium earth orbit (MEO) satellites revolving around the earth. They transmit pilot signals and other broadcast information, which are received and processed by the GPS receivers for determining geographical position. Signals from a certain number of satellites (e.g. five or more) should be received in order for the GPS receiver to accurately determine the geographical position of the user.

The assisted GNSS (A-GNSS) is a generic term used for any satellite based positioning method adapted for determining the position and other relevant information such as velocity of a UE. The assisted GPS (A-GPS) is tailored to work with a UE enabling the UE subscribers to relatively accurately determine their location, time, and even velocity (including direction) in an open area environment, provided that a sufficient number of GPS satellites are visible. A-GPS is standardized for UMTS.

The A-GPS requires that the cellular network (e.g. the base station or the RNC) provides data at least initially to assist an A-GPS capable UE to improve the measurement accuracy and to reduce the time required in determining the position of the UE. The assisting data includes a reference time, visible satellite list, satellite signal Doppler, code phase, and Doppler and code phase search windows. This information is obtained by a GPS receiver located at the serving base station, which can detect the navigational satellites more accurately. This data can be valid for a few minutes (e.g. less than five minutes) or longer depending on the code phase and Doppler search window size that can be accommodated by the UE.

Without network assisted data the UE can still determine its position. However in this case the position will be less accurate in some scenarios, for example when fewer satellites are visible or when the signals received from the satellites are weak. The acquisition of the assisted data obviously requires the UE to first synchronize to the network i.e. to camp on a cell. This means that prior to camping on a cell, the GPS based initial position of the UE without valid or up-to-date assisted data may incorporate errors when the signals received from the satellites are weak. The error in the position may be between hundreds of meters and two kilometers.

### Terrestrial Positioning Methods

There are several types of terrestrial positioning methods, which determine a UE position using signals measured by the UE and/or the radio network nodes, such as the RBSs. Some well known examples of terrestrial positioning methods are:
- The cell identity (e.g. enhanced cell ID) based method
- The network based uplink time difference of arrival (U-TDOA) of signals at different base stations
- The UE based observed time difference of arrival (OTDOA) of signals from three or more cells
- The fingerprinting or pattern matching positioning method

Some of these methods such as the cell identity based and pattern matching positioning make use of normal UE neighbor cell measurements such as the detected cell identity, received signal strength, path loss etc. In the case of the enhanced cell ID based method, the network uses the cell ID and additional more advanced measurements such as angle of arrival and round trip time measurements at the base stations. The combined use of these measurements can significantly improve the positioning accuracy.

On the other hand certain methods such as U-TDOA and OTDOA require specific measurements. For instance OTDOA requires UE measurement called time difference of arrival of signals from multiple pair of cells. U-TDOA measurements are required typically at three or more radio network nodes.

### SUMMARY

The object of the present invention is to address some of the problems and disadvantages outlined above, and to enable efficient ad hoc networking between user equipments of a cellular network. This object and others are achieved by the method and the network node according to the independent claims, and by the embodiments according to the dependent claims.

In accordance with a first aspect of the present invention, a method for a network node of supporting ad hoc networking between user equipments of a cellular network is provided. The network node is capable of accessing a user equipment capability database. The method comprising the steps of receiving an update message comprising information regarding a capability of a first user equipment, updating the user equipment capability database with the information comprised in the received update message, determining an identity of at least one further user equipment with which the first user equipment is able to communicate wirelessly, based on the information stored in the user equipment capability database, and transmitting a message comprising the determined identity of the at least one further user equipment and the first user equipment identity.

In accordance with a second aspect of the present invention, a method for a user equipment of a cellular network, of supporting ad hoc networking between user equipments of the cellular network, is provided. The method comprises the step of receiving a message from a network node capable of accessing a user equipment capability database. The message comprises an identity of at least one further user equipment with which the user equipment is able to communicate wirelessly, where the identity is determined based on information stored in the user equipment capability database. The method also comprises the step of establishing an ad hoc network with at least one of said identified further user equipments.

In accordance with a third aspect of the present invention, a network node configured to support ad hoc networking between user equipments of a cellular network is provided. The network node is capable of accessing a user equipment capability database and comprises a receiver configured to receive an update message comprising information regarding a capability of a first user equipment, and an updating unit configured to update the user equipment capability database with the information comprised in the received update message. It also comprises a determining unit configured to determine an identity of at least one further user equipment with which the first user equipment is able to communicate wirelessly, based on the information stored in the user equipment capability database, and a transmitter configured to transmit a message comprising the determined identity of the at least one further user equipment and the first user equipment identity.

In accordance with a fourth aspect of the present invention, a user equipment of a cellular network, configured to support ad hoc networking between user equipments of the cellular network, is provided. The user equipment comprises a receiver configured to receive a message from a network node capable of accessing a user equipment capability database. The message comprises an identity of at least one further user equipment with which the user equipment is able to communicate wirelessly, where the identity is determined based on information stored in the user equipment capability database. The user equipment also comprises an establishing unit configured to establish an ad hoc network with at least one of said identified further user equipments.

An advantage of embodiments of the present invention is that a mechanism is provided by which UEs with diverse capabilities such as supported bands and radio access technologies, carrier aggregation capabilities, antenna configuration and MIMO mode support, can exchange capability information without using an excessive amount of radio resources.

A further advantage of embodiments of the present invention is that they allow different types of UEs to advertise their own capabilities and detect other UEs capabilities in a resource efficient way by making use of the infrastructure.

Furthermore, an advantage of embodiments of the present invention is that they allow the UEs to make use of their full potential in terms of their capabilities when establishing an ad hoc communication. This leads to subscriber satisfaction, especially for those owning high end UEs. Still another advantage of embodiments of the present invention is that they improve the efficiency of local communication based on direct ad hoc solutions through support from the infrastructure.

### BRIEF DESCRIPTION OF THE DRAWINGS

**Figure 1a** illustrates schematically a part of a conventional wireless communication system wherein the present invention may be implemented.
**Figure 1b** illustrates schematically an ad hoc network in an infrastructure mode wherein the present invention may be implemented.
**Figure 1c** illustrates an example of capability grouping used for the matching algorithm according to the present invention.
**Figure 1d** illustrates an example of the output from the matching algorithm according to the present invention.
**Figure 2** illustrates schematically the signaling flow between UEs and the network node according to embodiments of the invention.
**Figures 3a****-b** are flowcharts of the method performed by the network node according to embodiments of the present invention.
**Figure 4** is a flowchart of the method performed by the user equipment according to embodiments of the present invention.
**Figure 5** illustrates schematically a network node and a user equipment according to embodiments of the present invention.

### DETAILED DESCRIPTION

In the following, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it will be apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

The present invention is described herein by way of reference to particular example scenarios. In particular the invention is described in a non-limiting general context in relation to an E-UTRAN. It should though be noted that the invention and its exemplary embodiments may also be applied to other types of radio access networks such as UTRAN, WiMax and GSM.

In several embodiments of the present invention, the problem of, in a resource efficient way, identifying and locating peer UEs that are compatible in terms of UE capabilities within a geographical area, and thus enabling the UEs to establish ad hoc networks where they can make use of their full potential in terms of capabilities and exchange services, is addressed by a solution where the infrastructure supports the ad hoc networking of the UEs.

The solution addresses a so called infrastructure mode, in which the ad hoc network has communication links towards a network node of a network such as an LTE network or a UMTS. The network node, which may be for example an RBS, an RNC, a core network (CN) node, or a separate dedicated node, maintains a so called UE capability database comprising data about ad hoc interested UEs that are currently supported by the network node and their associated capabilities. UEs that are interested in forming ad hoc networks, will register in the data base, e.g. upon cell reselection, when performing a tracking area update, or when handing over to a new RBS. This is done by sending an update message to the network node, comprising information regarding the capabilities of the UE.

It is thus the infrastructure that will support the ad hoc networking of UEs in embodiments of the present invention. The basic means for this infrastructure support is the UE capability database mentioned above, but also an algorithm that identifies compatible UEs in the serving area by matching the capability information of the UEs stored in the UE capability database. This algorithm will hereinafter be referred to as the matching algorithm. Other means for the ad hoc infrastructure support is a paging-like message multi-casted by the network node and dedicated to matched UEs. This message will thus comprise the identities of compatible UEs which may thus potentially form an ad hoc network, and is used to inform these identified compatible UEs about the compatibility of their capabilities.

As already mentioned above, the network node maintains a database of UEs interested in ad hoc communication. This database also comprises the UE capabilities and is therefore referred to as the UE capability database. The database is maintained for a certain geographical area, which may be e.g. the coverage area of a cell or a tracking area, similarly to the paging procedure in UMTS and LTE. If the database is maintained by a separate dedicated network node rather then e.g. an RBS, this dedicated network node may communicate with other nodes, such as an RBS, in order to transmit the paging-like message to the compatible UEs. The dedicated network node may be configurable via a self optimizing network (SON) node or an operational and maintenance (O&M) function (also called Operations Support System, OSS) for various purposes, such as for the modification of the matching algorithm parameters.

The matching algorithm is executed by the network node. One way of performing the matching is described below. The UE matching algorithm identifies UEs that are matching or compatible in terms of their capabilities. There may be different levels of compatibility. Incompatible UEs (0-compatible) cannot communicate at all, partially compatible UEs (1-compatible) may communicate, but not efficiently or not with their full capability, and fully compatible UEs (2-compatible) may communicate efficiently and utilizing their full capabilities. In general, more compatibility levels can be defined, in which case UEs can be I-compatible (I=0, 1, 2, etc).

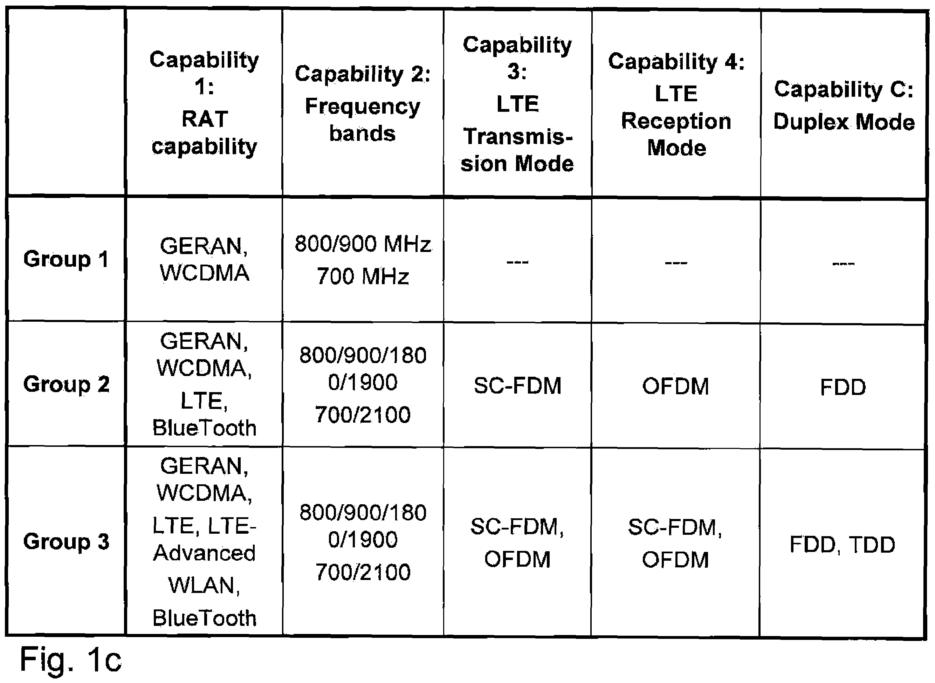

A UE capability group is defined in terms of the capabilities that UEs belonging to that capability group must have. All UEs belonging to that group may communicate with one another and can thus form an ad-hoc network. There are a wide number of possible capabilities, comprising the radio access technology (RAT) capability, frequency band capability, transmission mode capability, reception mode capability, duplex mode capability (TDD or FDD or both), header compression/decompression capability, carrier aggregation capability, MIMO mode capability, positioning capability, provided service capability (best effort, interactive, streaming, real time, gaming), user equipment category, maximum amount of received/transmitted data, maximum data rate, supported modulation type, supported bandwidth, capability of receiving from and transmitting to more than one user equipment simultaneously, maximum transmission power level, transmission power class, capabilities of measuring on other carriers and RAT, capabilities of measuring downlink channel state information, and supported location determining methods etc. The exact UE capabilities are defined by the operator and are configured for each UE (default). The human user can reconfigure each of the capability values, for example when upgrading the software of the UE or when installing a new application program or new interface, etc. The UE capability groups may also be defined by the operator. For example, an operator may decide that there are three UE capability groups, where each of the groups is characterized by a certain set of values for the capabilities, as shown in the table in **Figure 1c****.** Since the number of groups is limited as well as the number of defining capabilities for each group, it is accepted that two UEs that get classified into the same group are not 100% compatible. However, the probability that they are indeed compatible and can successfully form an ad-hoc network is much larger than without the matching algorithm. The operator can refine the algorithm by adding more capability groups and adding more capabilities to each such group, thereby making the matching algorithm more fine grained and more precise.

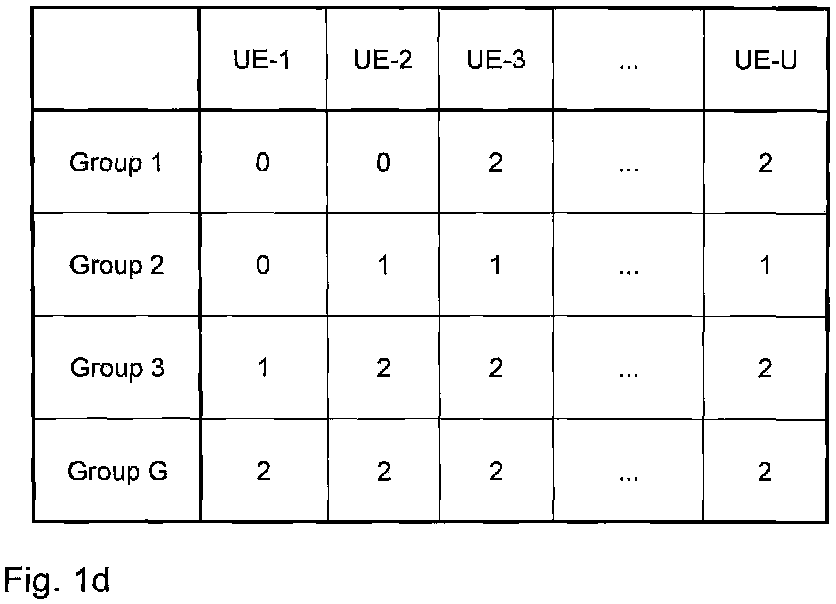

The UE matching algorithm determines the compatibility level I for a new UE with each UE capability group. The output of the matching algorithm is thus a new column in a matching table, such as the one shown in **Figure 1d****.** Each field in a new UE column specifies the compatibility level (0, 1, ... I) of this new UE with each of the UE capability groups. If there are G groups, then there are G fields of the column corresponding to this new UE. The new UE can thus belong to several groups or to none of them (if I=0 in each field of the column). For example, the UE can belong to a group with which it can fully communicate (I = 2) and several other groups with which it can communicate with limited efficiency (I=1), while with UEs belonging to other groups it cannot communicate at all (I = 0). An example of a UE capability is the supported RATs. 0-compatible UEs would be UEs where none of the RATs are same, 1-compatible UEs would be UEs where at least one of the RATs that support direct UE-UE communication (e.g. Bluetooth, WLAN or LTE-A++) are the same, and 2-compatible UEs would be UEs where two or more of the RATs that support direct UE-UE communication are the same.

The compatibility level in the matching table may also be associated with a time stamp. The time stamp specifies the validity of the compatibility level in time. The time stamp can be an absolute time interval or a "before x" or "after y" type of time specification. Furthermore, the compatibility level in the matching table can be associated with a position information. The position information can e.g. be an absolute GPS coordinate and a radius, or a set of GPS coordinates (determining an area in the form of a triangle or a polygon, etc).

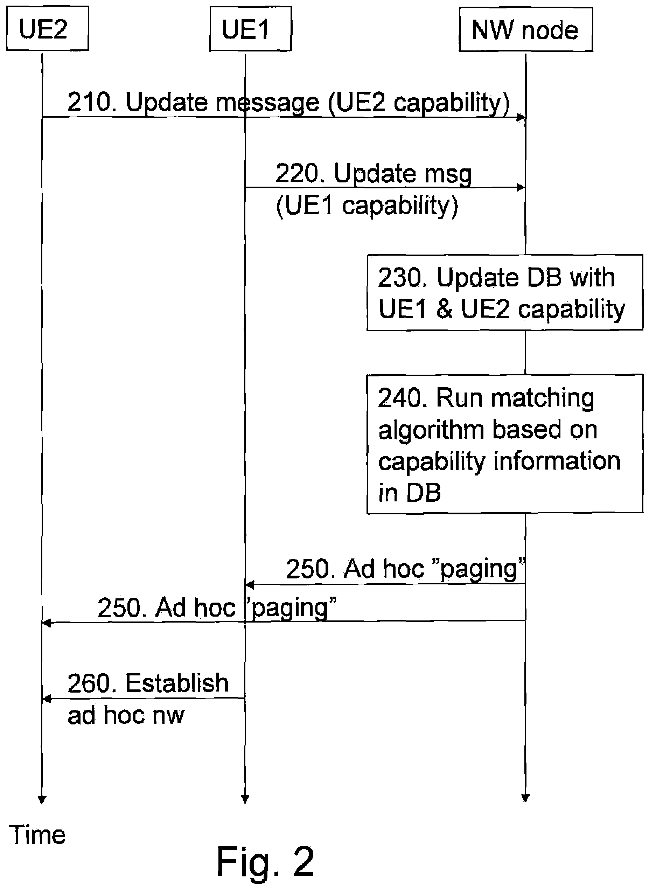

An embodiment of the present invention is in the following described with reference to **Figure 2****,** schematically illustrating the signaling flow between two UEs, UE1 and UE2, and the network node supporting the ad hoc networking according to one embodiment of the invention. When UE1 and UE2, which are interested in ad hoc networking, are triggered to register in the UE capability database (DB), they transmit a database update message 210, 220, (similar to a tracking area update message) to the network node. In embodiments of the invention, the UE may be triggered to transmit such an update message when it performs a cell reselection, a tracking area update, or a handover. Alternatively it may be triggered to transmit the update message at any time i.e. not necessarily at the time of cell reselection or at handover. Either the UE may autonomously transmit the update message at any time or it may be triggered by an application program in the UE (further described below). Another possibility is that the network node at any time sends a broadcast or multi-cast message to UEs, requesting them to transmit the update message.

The transmitted update message comprises the UE's capability information, such as the UE category, supported RATs, supported transmission duplex modes, supported frequency bands, and/or any of the other capabilities described above. The update message 210, 220 can be either an access stratum or a non-access stratum message (NAS). A NAS is sent transparently through the RBS, which could be the case if the network node managing the database is some other node than the RBS. The database update message 210, 220 transmitted by UE1 and UE2 may in other embodiments also comprise information regarding supported applications or services, the UEs actual position information, or information regarding the location and/or time at which the UE is interested in carrying out ad-hoc communication. Information regarding the time may for example be the start time, the duration, and the end times for ad hoc communication, which can be used to match UEs that want to communicate around the same time or over the same duration. The UEs position information may be used to match UEs which are geographically close to each for ad hoc communication, as a short distance between UEs makes the communication more efficient in terms of power consumption and radio channel quality e.g. Location and time related information for ad hoc networking may thus be stored in the database together with the capability information, and may be used in the matching algorithm to time stamp a compatibility level in the matching table e.g., as described above.

Information about a UE's supported applications or services, comprised in the update message and stored in the capability database, may be used as described in the following. Assume that UE1 may be acting as a server or a data base containing information such as pictures, movies or translation of books, and that UE2 wants to retrieve such information. By matching UE1 and UE2 based on this service information, the information can be exchanged.

Other information that is possible to add in the update message and to store in the capability database is e.g. the UE operating system or semi-static capabilities such as UE battery information or UE power consumption status. UE battery information may be expressed in terms of the current UE battery power and/or static information such as battery power capability (e.g. standby time or talk time). The current UE battery power may be expressed e.g. in power units such as watts (used or remaining), in percentage or in levels such as low, medium and full. The UE battery power information may be used by the matching algorithm in different ways. For instance when the reported UE battery power is low, some of the other UE capabilities may be fully or partly restricted. As an example, the use of MIMO capabilities may be restricted to (2x1) MIMO instead of the possible (4x2) MIMO. This means that such a UE will only be capable of using two transmit and one receive antennas, although it can transmit and receive using four transmit and two receive antennas according to the actual antenna capabilities. In this particular example the matching algorithm can match this UE with another UE for which the data reception from two transmit antennas is acceptable for the purpose of ad hoc communication.

In an alternative embodiment of the present invention the update message may be received from another network node rather than from the UE. This may for example be the case when the UE's subscription always acknowledges ad hoc networking. Relevant UE capabilities may therefore already be stored in the network, and the update message may then be transmitted from another network node. For example, a home location register (HLR) can transmit an update message to an eNB which is managing the capability database, or a HLR can transmit an update message to a visiting location register (VLR). Another example is when the UE changes its registration area such as the location area or tracking area. The UE's update message, which is stored at a previous network node may then be transmitted to the new network node serving the new location or tracking area of this UE. As already described, the UE may also transmit the update message to the network node upon entering a new registration area e.g. location or tracking area. In this case the UE may only transmit the partial information such as information which may vary over time e.g. positioning information, time duration for ad hoc communication etc. On the other hand static or semi-static information such as UE antenna capabilities are received by the new network node from the old network node in the update message, which may typically contain a complete set of information pertaining to the UE capabilities.

In one embodiment of the present invention, a UE interested in ad hoc networking, however not currently camped on or connected to the network node, may proactively register at the database, by accessing the network temporarily for the purpose of transmitting an update message to register in the database. The proactive registration approach may be realized by using an application program which allows the user equipment subscriber to enter its preference of supporting other compatible UEs alternatively of getting support from other compatible UEs. In the former case the subscriber may obtain a reward such as bonus points. In the latter case the subscriber may attain an enhanced performance with just a slight increase in the cost. The application program may also explicitly inquire the subscriber whether all its UE capabilities or only a sub-set or limited capabilities can be used for ad hoc communication. The use of limited capabilities means for instance that only 20 MHz bandwidth are used for ad hoc communication, although the UE's full bandwidth capability could be up to 40 MHz. Similarly the limited antenna usage may imply using only up to two transmit antennas for ad hoc communication although the UE may support up to four transmit antennas. The advantage of the use of limited capabilities is that this may lead to reduced processing and/or lower power consumption at the UE. Based on the subscriber's input to the application program, the UE may, e.g. in the background, automatically update the database, by sending an update message as described above. The proactive registration may be done from time to time or after the expiry of a timer of the UE data (further described below).

The network node will after having received an update message 210, 220 access the database and update 230 it with the received information. The database will thus comprise all registered UEs and their capability information, and possibly also application or service information, information about the UE position, or information about where and when the UE would like to connect with other UEs etc. It should be noted that the UE capability database may also be placed in some other node than the ad hoc supporting network node, as long as it is accessible to the ad hoc supporting network node.

At registration of the UE capability information in the database, a timer may optionally be started. The timer may be used to delete information that is not used within a timeout period of the timer. This may e.g. be the case when the UE never enters the serving area of the RBSs supported by the network node managing the database, which is a possible scenario when the proactive registration described above is used. The timers timeout period may correspond to a pre-determined value or it could be decided by the network node or the UE, or by both through mutual communication.

When UE capability data has been stored in the database, the network node executes a matching algorithm 240 that identifies UEs with matching capabilities. Also other information that is provided in the update message and stored in the database, such as location and/or timing related information, may be taken into account in this matching.

As already described, there are various ways in which the matching algorithm can identify matching UEs or groups of UEs. In its simplest form, the matching algorithm simply selects UEs belonging to the same 3GPP UE category, which are typically expressed in terms of maximum uplink and downlink bit rates. For example UEs supporting LTE UE category #1 (i.e. 100 Mbps in DL and 50 Mbps in UL) could belong to a UE category #1 group. However such a group can be identified by a pre-determined or dynamically assigned identifier e.g. capability group #0. Hence, the output of the matching algorithm is the identity of one or more UEs that are belonging to the same capability group and are thus compatible in terms of capabilities. Another simple example is to form a group (capability group #1) of UEs, which have similar MIMO capability (e.g. 2x2 MIMO) regardless of maximum downlink and uplink bit rates. A prerequisite is that all UEs in capability group #1 belong to the same RAT and also support the same frequency bands, as mutual communication would not be possible otherwise. However, incidentally some of the UEs in capability group #1 may also support bitrates equivalent to that of capability group #0. Yet another example is that of a capability group #2, which includes UEs supporting simultaneous communication (transmission/reception) over two carriers belonging to two different frequency bands, (2x2) MIMO operation per carrier, and maximum downlink/uplink bitrates equivalent to LTE UE category #1 per carrier. The above examples show that the same UE may potentially belong to several capability groups, as a UE belonging to capability group #2 may also belong to capability group #1 and #0. Assuming that at a certain time such a UE is only using one carrier frequency when operating in capability group #2, the UE may at the same time, if needed, operate also in capability group #0 or #1. However when group #2 capabilities are fully used, the UE operation in capability group #0 and #1 is excluded.

A capability group may also comprise UEs supporting similar RATs e.g. capability group #3 supporting WLAN, LTE and WCDMA. Similarly another capability group #4 comprises of UEs, which support WLAN, WCDMA and GSM. The capability groups may also be created according to the UE data rate requirements coupled to the service type. For instance UEs interested in broadband communication (high data rate download) are categorized into a group of UEs, which are capable of supporting very high data rate (e.g. 100 Mbps or more) regardless of the underlying technologies. For example such a capability group #5 may comprise of UEs, which may support any of the following features: (2x2) MIMO dual cell HSDPA (i.e. receiving over 2 WCDMA carriers) and LTE category #1. Hence a UE supporting normal WCDMA and GSM cannot be included in capability group #5 since it cannot provide the needed capabilities, while UEs supporting only LTE category #1 can.

In the example of **Figure 2****,** UE2 capabilities are found to match UE1 capabilities when the network node runs the matching algorithm 240. As described above they may be part of the same capability group. The network node assembles a paging-like message to the UEs that are identified as matching for ad hoc networking. In the example of **Figure 2****,** the ad hoc "paging" message 250 is multi-casted to UE1 and UE2, as the matching algorithm run by the network node 240 has identified them as compatible defined in terms of capabilities. The message 250 thus comprises the identity of UE1 and UE2, and only UE1 and UE2 will listen to this multi-casted message as they will read their own identities in the message, while other UEs that are not matched with UE1 and UE2 will disregard the message. The UE identities comprised in the ad hoc "paging" message, may be either a physical identity, a global identity, a unique identity, a temporary identity, or a group identity temporarily assigned to a group of UEs, such as a capability group identity.

The ad hoc "paging" message transmitted by the network node 250, may in one embodiment also contain location and/or timing related information, such as a geographical position or a time period where the compatible UEs can meet for ad-hoc communications and mutual service provisioning. For instance, the matching algorithm may perform a mapping between the positions of the UEs or their preferred location or time for ad hoc networking, and thereby determine a position or time for ad hoc networking for that specific compatibility group. The geographical position may be displayed on a map of the area shown on the screen of the UE. Alternatively it can be expressed in the form of a text message.

In embodiments of the present invention, the network node can decide on assembling and sending out the ad hoc "paging" message 250 to UEs either as soon as a matching group of UEs is found, regardless of how many UEs that are comprised in the group, or only if the number of UEs in the matching group exceeds a certain threshold N at any given time instance or over a certain time duration. The advantage of this latter embodiment is that it reduces signaling overhead. At any time, the network node can also dissolve or temporarily disable or update a matching group (e.g. when a new member is added or an existing one is deleted), and indicate this to the UEs by again sending a paging like message. The ad hoc "paging" message may be signaled once, a few times or regularly.

When UE1 and UE2 receive the ad hoc "paging" message 250, either of them may thus initiate the establishment of an ad hoc network 260 with the other one, based on that they received the identity of the other compatible UE in the message 250. The establishment may be done using state of the art ad hoc link establishment methods. After an ad hoc link has been established 260, the UE1 may also send additional details on a UE specific dedicated or shared communication link to UE2. For example, UE1 may broadcast a HELLO message known from the state of the art of ad hoc networking containing the own identity and the matched UEs identity and optionally a service identity.

Alternatively, the UE1 may specifically request UE2 to refrain from using certain frequency channels in order not to cause interference (a so called "Soft admission control"). This is the case when UE1 learns about the UE2 capabilities. The matching group information provided by the network node is considered to be a recommendation. It is therefore at the discretion of the UEs whether to use the 'recommended' matching group knowledge or not for the ad hoc communication. Hence in this example UE1 may decide not to communicate with UE2 either because they are not fully compatible in terms of desired capabilities or because UE1 wants to establish an ad hoc network with a more preferable UE. It is possible that UE1 also belongs to another matching capability group. Hence UE1 may even attempt to establish an ad hoc communication with a UE belonging to the other capability group. Alternatively, UE1 may arbitrarily choose another UE for the purpose of establishing an ad hoc communication link.

The mechanism described above with reference to **Figure 2****,** thus allows the UEs interested in establishing ad-hoc communication to acquire adequate information about the availability of UEs suitable for an optimal ad hoc communication in a resource efficient way, by using support from the infrastructure to which the UEs are connected.

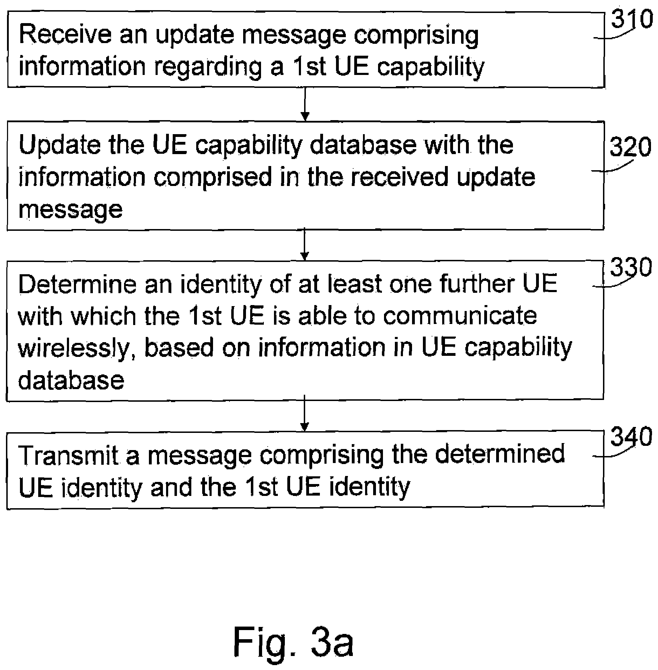

**Figure 3a** is a flowchart of the method performed by the network node according to embodiments of the present invention. The network node may e.g. be an RBS, an RNC, a CN node or a separate dedicate node which is capable of accessing a UE capability database which may be placed in the network node or in some other node in the network. The method comprises the following steps:
- 310: Receive an update message comprising information regarding a capability of a first UE. This first UE indicates that it is interested in forming an ad hoc network, and sends its capability information to the network node, in order for the network node to match it with other UEs interested in ad hoc networking. The update message may instead be received from another network node, e.g. in the case of a UE with a subscription that always acknowledges ad hoc networking.
- 320: Update the user equipment capability database with the information comprised in the received update message. The database comprises the identities of all UEs that want to form ad hoc networks in the area supported by the network node, as well as the corresponding UE capabilities.
- 330: Determine an identity of at least one further UE with which the first UE is able to communicate wirelessly, based on the information stored in the user equipment capability database. The matching algorithm is used to determine identities of other matching UEs in terms of capabilities (e.g. UEs corresponding to the same capability groups as described above), based on the UE capability information stored in the database. The determined identity may be a physical identity, a global identity, a unique identity, a temporary identity, a group identity, or any combination of these identities.
- 340: Transmit a message comprising the determined identity of the at least one further UE, i.e. the other matching UEs, and the first UE identity. This is the ad hoc "paging" message that has been described above, that is multi-casted to all matching UEs, in order for these UEs to realize which UEs that they can establish an ad hoc connection with. In one embodiment, the message is only transmitted if there are at least N identified matching UEs, in order to minimize the signalling.

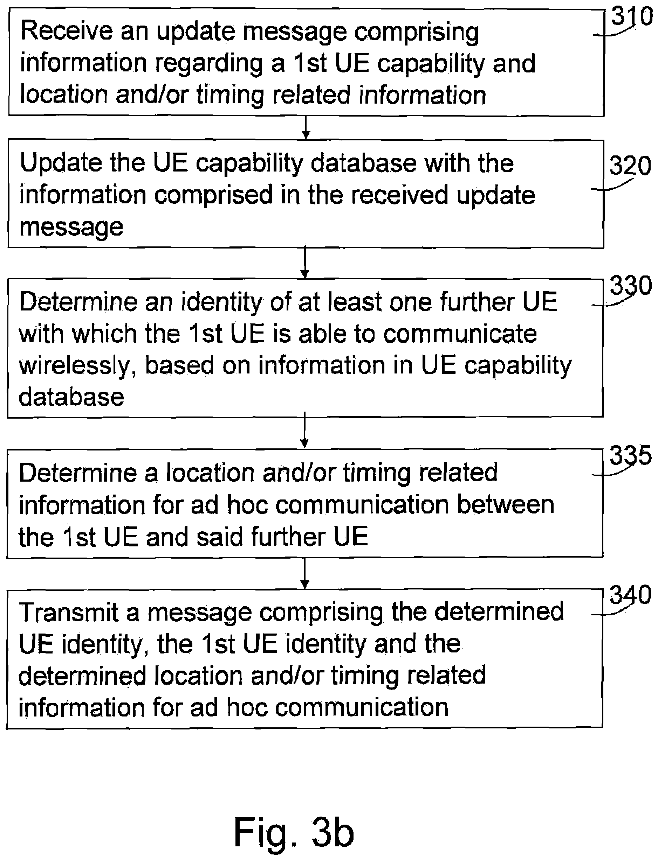

**Figure 3b** illustrates schematically the method of the network node in a flowchart according to an embodiment of the present invention. The method comprises the following steps:
- 310: Receive an update message comprising information regarding a capability of a first UE, as well as location and/or timing related information for ad hoc communication for the first user equipment. In this case the UE indicates that it wants to form ad hoc networks at a certain location or at a certain point in time. It may alternatively indicate its actual position.
- 320: Update the user equipment capability database with the information comprised in the received update message. The database thus comprises the identities of all UEs that want to form ad hoc networks in the area supported by the network node, the corresponding UE capabilities, as well as location and timing related information for ad hoc communication for the UE.
- 330: Determine an identity of at least one further UE with which the first UE is able to communicate wirelessly, based on the information stored in the user equipment capability database.
- 330: Determine a location or a time at which the first UE and the identified at least one further UE may communicate wirelessly, based on the location and timing related information stored in the user equipment capability database. The matching algorithm thus also takes this information into account when it determines possible matching UEs.
- 340: Transmit a message comprising the determined identity of the at least one further UE, the first UE identity, as well as information about when and where the ad hoc connection is possible.

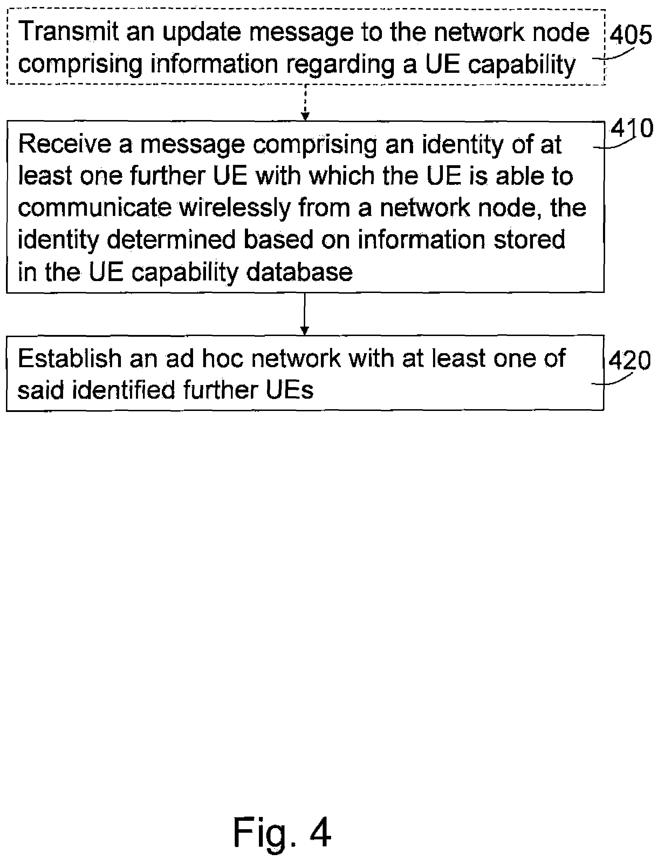

**Figure 4** is a flowchart of the method performed by the user equipment according to embodiments of the present invention. The method comprises the following steps:
- 405: The optional step of transmitting an update message to the network node. This step may also be performed by some other network node. The update message comprises information regarding a capability of the user equipment, but may also comprise other information such as location and timing information for ad hoc networking, or service or application information e.g. as already described above. The transmission of an update message may be triggered by a cell reselection event, a tracking area update, a handover event, or an application program in the user equipment e.g.
- 410: Receive a message from the network node, which is capable of accessing the user equipment capability database. The message comprises an identity of at least one further user equipment with which the user equipment is able to communicate wirelessly. This identity has been determined based on information stored in the user equipment capability database by the network node, as described above with reference to **Figure 3a** **and** **3b****.**
- 420: Establish an ad hoc network with at least one of said identified further user equipments. If the message received from the network node comprises location or timing related information, this information is also used when establishing the ad hoc network.

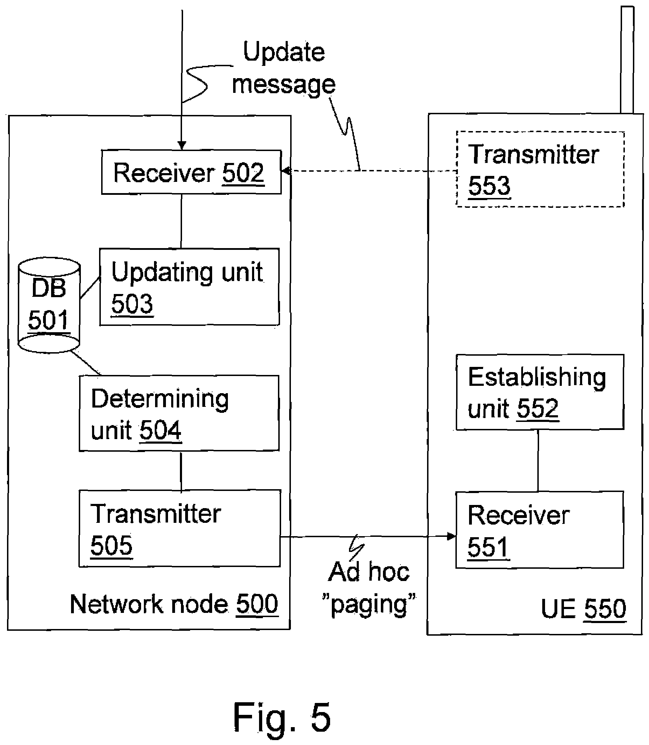

Schematically illustrated in **figure 5** and according to embodiments of the present invention, is the network node 500 and a user equipment 550.

The network node 500 is capable of accessing the user equipment capability database 501 and comprises a receiver 502, which is configured to receive an update message comprising information regarding a capability of the user equipment 550. This update message may be received from the user equipment 550 itself or it may be received from some other network node which keeps information about the user equipment capability and its preference to form ad hoc networks. The network node also comprises an updating unit 503 configured to update the user equipment capability database 501 with the information comprised in the received update message, such as capability information but also location or timing information for ad hoc networking e.g. Furthermore, the network node comprises a determining unit 504 configured to determine an identity of at least one further matching user equipment with which the user equipment 550 is able to communicate wirelessly, based on the information stored in the user equipment capability database 501. The determining unit 504 may in one embodiment be configured to determine also a location or a timing related information for ad hoc networking between the user equipment 550 and the at least one further matching user equipment. The network node further comprises a transmitter 505 configured to transmit the ad hoc "paging" message, comprising the determined identity of the at least one further user equipment and the user equipment 550 identity. The transmitter 505 may be configured to transmit the "paging" message only when the number of the at least one further user equipment with which the first user equipment is able to communicate wirelessly, is larger than a value N. The "paging" message may also comprise the determined location and/or timing related information for ad hoc communication.

The user equipment 550 comprises a receiver 551 configured to receive a message from the network node 500. The message comprises an identity of at least one further matching user equipment with which the user equipment 550 is able to communicate wirelessly, and thus to establish an ad hoc network with. The user equipment 550 also comprises an establishing unit 552 configured to establish an ad hoc network with at least one of said identified matching user equipments. The receiver 551 is in one embodiment configured to receive a message also comprising a location and/or timing related information for ad hoc communication associated with the identity of the at least one further user equipment with which the user equipment is able to communicate wirelessly. In this embodiment, the establishing unit 552 is configured to establish an ad hoc network based also on the location and/or timing related information for ad hoc communication.

The user equipment may in one embodiment also comprise a transmitter 553 which is configured to transmit an update message to the network node. The update message comprises information regarding a capability of the user equipment 550, and may optionally comprise other information such as timing and location related information for ad hoc networking for the user equipment 550. The transmitter 553 may also be configured to transmit the update message when it is triggered by a cell reselection event, a tracking area update, a handover event, or an application program in the user equipment.

The above mentioned and described embodiments are only given as examples and should not be limiting to the present invention. Other solutions, uses, objectives, and functions within the scope of the invention as claimed in the accompanying patent claims should be apparent for the person skilled in the art.

## Claims

1. A method for a network node of supporting ad hoc networking between user equipments, UEs, of a cellular network, wherein the network node is capable of accessing a user equipment capability database, the method comprising the following steps:
- receiving (310) an update message comprising information regarding a capability of a first user equipment,
- updating (320) the user equipment capability database with the information comprised in the received update message, wherein the user equipment capability database comprises identities of all the UEs that want to form the ad hoc networks in area supported by the network node and corresponding information of UE capabilities,
- determining (330) an identity of at least one further user equipment with which the first user equipment is able to communicate wirelessly ,by determining compatible UEs in the serving area by matching the capability information of the UEs stored in the user equipment capability database, wherein the compatible UEs comprises different levels of compatibility, and wherein the compatible UEs are said at least one further user equipment that are partially or fully compatible in terms of capabilities with the first user equipment, and
- transmitting (340) a message to the first user equipment and the at least one further user equipment comprising the determined identity of the at least one further user equipment and the first user equipment identity.

2. The method according to claim 1, wherein the update message is received from the first user equipment or from a further network node.

3. The method according to any of the preceding claims, wherein the identity comprises at least one of: a physical identity, a global identity, a unique identity, a temporary identity, and a group identity.

4. The method according to any of the preceding claims, wherein the step of transmitting (340) a message is performed when the number of the at least one further user equipments with which the first user equipment is able to communicate wirelessly, is larger than a value N.

5. The method according to any of the preceding claims, wherein the received update message further comprises a location and/or a timing related information for ad hoc communication for the first user equipment, and wherein the step of determining (330) further comprises determining (335) a location and/or a timing related information for ad hoc communication between the first user equipment and the at least one further user equipment, and the step of transmitting (340) comprises transmitting a message comprising also the determined location and/or timing related information for ad hoc communication.

6. A network node (500) configured to support ad hoc networking between user equipments , UEs, of a cellular network, wherein the network node is capable of accessing a user equipment capability database (501) and comprises:
- a receiver (502) configured to receive an update message comprising information regarding a capability of a first user equipment (550),
- an updating unit (503) configured to update the user equipment capability database (501) with the information comprised in the received update message, wherein the user equipment capability database comprises identities of all the UEs that want to form the ad hoc networks in area supported by the network node and corresponding information of UE capabilities,
- a determining unit (504) configured to
determine an identity of at least one further user equipment with which the first user equipment is able to communicate wirelessly, by determining compatible UEs in the serving area by matching the capability information of the UEs stored in the user equipment capability database, wherein the compatible UEs comprises different levels of compatibility, and wherein the compatible UEs are said at least one further user equipment that are partially or fully compatible in terms of capabilities with the first user equipment; and
- a transmitter (505) configured to transmit to the first user equipment and the at least one further user equipment a message comprising the determined identity of the at least one further user equipment and the first user equipment identity.

7. The network node according to claim 6, wherein the receiver (502) is configured to receive the update message from the first user equipment or from a further network node.

8. The network node according to any of the claims 6-7, wherein the identity comprises at least one of: a physical identity, a global identity, a unique identity, a temporary identity, and a group identity.

9. The network node according to any of the claims 6-8, wherein the transmitter (505) is configured to transmit a message when the number of the at least one further user equipment with which the first user equipment is able to communicate wirelessly, is larger than a value N.

10. The network node according to any of the claims 6-9, wherein the received update message further comprises a location and/or a timing related information for ad hoc communication for the first user equipment, and wherein the determining unit (504) is further configured to determine a location and/or a timing related information for ad hoc communication between the first user equipment and the at least one further user equipment, and the transmitter (505) is configured to transmit a message comprising also the determined location and/or timing related information for ad hoc communication.

## Patentansprüche

1. Verfahren für einen Netzknoten zum Unterstützen von Adhoc-Vernetzung zwischen Benutzereinrichtungen, UEs, eines zellularen Netzes, wobei der Netzknoten in der Lage ist, auf eine Benutzereinrichtungsfähigkeits-Datenbank zuzugreifen, wobei das Verfahren die folgenden Schritte umfasst:
- Empfangen (310) einer Aktualisierungsnachricht umfassend Informationen in Bezug auf eine Fähigkeit einer ersten Benutzereinrichtung,
- Aktualisieren (320) der Benutzereinrichtungsfähigkeits-Datenbank mit den Informationen, die in der empfangenen Aktualisierungsnachricht enthalten sind, wobei die Benutzereinrichtungsfähigkeits-Datenbank Identitäten von allen UEs, die die Adhoc-Netze in dem vom Netzknoten unterstützten Bereich bilden möchten, und entsprechende Informationen über UE-Fähigkeiten umfasst,
- Bestimmen (330) einer Identität von mindestens einer weiteren Benutzereinrichtung, mit der die erste Benutzereinrichtung drahtlos kommunizieren kann, durch Bestimmen von kompatiblen UEs in dem Versorgungsbereich durch Abstimmen der in der Benutzereinrichtungsfähigkeits-Datenbank gespeicherten Fähigkeitsinformationen der UEs, wobei die kompatiblen UEs verschiedene Kompatibilitätsebenen umfassen und wobei die kompatiblen UEs die mindestens eine weitere Benutzereinrichtung sind, die in Bezug auf Fähigkeiten teilweise oder vollständig mit der ersten Benutzereinrichtung kompatibel sind, und
- Übertragen (340) einer Nachricht an die erste Benutzereinrichtung und die mindestens eine weitere Benutzereinrichtung, die die bestimmte Identität der mindestens einen weiteren Benutzereinrichtung und die Identität der ersten Benutzereinrichtung umfasst.

2. Verfahren nach Anspruch 1, wobei die Aktualisierungsnachricht von der ersten Benutzereinrichtung oder von einem weiteren Netzknoten empfangen wird.

3. Verfahren nach einem der vorhergehenden Ansprüche, wobei die Identität mindestens eines umfasst von: einer physischen Identität, einer globalen Identität, einer eindeutigen Identität, einer temporären Identität und einer Gruppenidentität.

4. Verfahren nach einem der vorhergehenden Ansprüche, wobei der Schritt des Übertragens (340) einer Nachricht durchgeführt wird, wenn die Anzahl der mindestens einen weiteren Benutzereinrichtungen, mit denen die ersten Benutzereinrichtung drahtlos kommunizieren kann, größer als ein Wert N ist.

5. Verfahren nach einem der vorhergehenden Ansprüche, wobei die empfangene Aktualisierungsnachricht ferner einen Standort und/oder eine zeitliche Information für Adhoc-Kommunikation für die erste Benutzereinrichtung umfasst und wobei der Schritt des Bestimmens (330) ferner das Bestimmen (335) eines Standortes und/oder einer zeitlichen Information für Adhoc-Kommunikation zwischen der ersten Benutzereinrichtung und der mindestens einen weiteren Benutzereinrichtung umfasst und der Schritt des Übertragens (340) das Übertragen einer Nachricht umfasst, die auch den bestimmten Standort und/oder die zeitliche Information für Adhoc-Kommunikation umfasst.

6. Netzknoten (500), der dazu konfiguriert ist, Ad-hoc-Vernetzen zwischen Benutzereinrichtungen, UEs, eines zellularen Netzes zu unterstützen, wobei der Netzknoten in der Lage ist, auf eine Benutzereinrichtungsfähigkeits-Datenbank (501) zuzugreifen, und umfasst:
- einen Empfänger (502), der konfiguriert ist zum Empfangen einer Aktualisierungsnachricht umfassend Informationen in Bezug auf die Fähigkeit einer ersten Benutzereinrichtung (550),
- eine Aktualisierungseinheit (503), die konfiguriert ist zum Aktualisieren der Benutzereinrichtungsfähigkeits-Datenbank (501) mit den in der empfangenen Aktualisierungsnachricht enthaltenen Informationen, wobei die Benutzereinrichtungsfähigkeits-Datenbank Identitäten von allen UEs, die die Adhoc-Netze in dem vom Netzknoten unterstützten Bereich bilden möchten, und entsprechende Informationen über UE-Fähigkeiten umfasst,
- eine Bestimmungseinheit (504), die konfiguriert ist zum:
Bestimmen einer Identität von mindestens einer weiteren Benutzereinrichtung, mit der die erste Benutzereinrichtung drahtlos kommunizieren kann, durch Bestimmen von kompatiblen UEs in dem Versorgungsbereich durch Abstimmen der in der Benutzereinrichtungsfähigkeits-Datenbank gespeicherten Fähigkeitsinformationen der UEs, wobei die kompatiblen UEs verschiedene Kompatibilitätsebenen umfassen und wobei die kompatiblen UEs mindestens eine weitere Benutzereinrichtung sind, die in Bezug auf Fähigkeiten teilweise oder vollständig mit der ersten Benutzereinrichtung kompatibel sind; und
- einen Sender (505), der konfiguriert ist zum Übertragen einer Nachricht an die erste Benutzereinrichtung und die mindestens eine weitere Benutzereinrichtung, die die bestimmte Identität der mindestens einen weiteren Benutzereinrichtung und die Identität der ersten Benutzereinrichtung umfasst.

7. Netzknoten nach Anspruch 6, wobei der Empfänger (502) dazu konfiguriert ist, die Aktualisierungsnachricht von der ersten Benutzereinrichtung oder von einem weiteren Netzknoten zu empfangen.

8. Netzknoten nach einem der Ansprüche 6-7, wobei die Identität mindestens eines umfasst von: einer physischen Identität, einer globalen Identität, einer eindeutigen Identität, einer temporären Identität und einer Gruppenidentität.

9. Netzknoten nach einem der Ansprüche 6-8, wobei der Sender (505) konfiguriert ist zum Übertragen einer Nachricht, wenn die Anzahl der mindestens einen weiteren Benutzereinrichtung, mit der die erste Benutzereinrichtung drahtlos kommunizieren kann, größer als ein Wert N ist.

10. Netzknoten nach einem der Ansprüche 6-9, wobei die empfangene Aktualisierungsnachricht ferner einen Standort und/oder eine zeitliche Information für Adhoc-Kommunikation für die erste Benutzereinrichtung umfasst und wobei die Bestimmungseinheit (504) ferner konfiguriert ist zum Bestimmen eines Standortes und/oder einer zeitlichen Information für Adhoc-Kommunikation zwischen der ersten Benutzereinrichtung und der mindestens einen weiteren Benutzereinrichtung und der Sender (505) konfiguriert ist zum Übertragen einer Nachricht, die auch den bestimmten Standort und/oder die zeitlichen Informationen für Adhoc-Kommunikation umfasst.

## Revendications

1. Procédé pour un nœud de réseau de prise en charge d'une mise en réseau ad hoc entre des équipements utilisateur, UE, d'un réseau cellulaire, dans lequel le nœud de réseau est capable d'accéder à une base de données de capacité d'équipement utilisateur, le procédé comprenant les étapes suivantes :
- réception (310) d'un message de mise à jour comprenant des informations concernant une capacité d'un premier équipement utilisateur,
- mise à jour (320) de la base de données de capacité d'équipement utilisateur avec les informations comprises dans le message de mise à jour reçu, dans lequel la base de données de capacité d'équipement utilisateur comprend des identités de tous les UE qui veulent former les réseaux ad hoc dans une zone prise en charge par le nœud de réseau et des informations correspondantes de capacités d'UE,
- détermination (330) d'une identité d'au moins un autre équipement utilisateur avec lequel le premier équipement utilisateur est capable de communiquer sans fil, en déterminant des UE compatibles dans la zone de desserte en faisant correspondre les informations de capacité des UE stockées dans la base de données de capacité d'équipement utilisateur, dans lequel les UE compatibles comprennent différents niveaux de compatibilité, et dans lequel les UE compatibles sont lesdits autres équipements utilisateur au moins uniques qui sont partiellement ou complètement compatibles en termes de capacités avec le premier équipement utilisateur, et
- transmission (340) d'un message au premier équipement utilisateur et à l'au moins un autre équipement utilisateur comprenant l'identité déterminée de l'au moins un autre équipement utilisateur et l'identité de premier équipement utilisateur.

2. Procédé selon la revendication 1, dans lequel le message de mise à jour est reçu du premier équipement utilisateur ou d'un autre nœud de réseau.

3. Procédé selon l'une quelconque des revendications précédentes, dans lequel l'identité comprend au moins l'une parmi : une identité physique, une identité globale, une identité unique, une identité temporaire, et une identité de groupe.

4. Procédé selon l'une quelconque des revendications précédentes, dans lequel l'étape de transmission (340) d'un message est mise en œuvre lorsque le nombre des autres équipements utilisateur au moins uniques avec lesquels le premier équipement utilisateur est capable de communiquer sans fil, est plus grand qu'une valeur N.

5. Procédé selon l'une quelconque des revendications précédentes, dans lequel le message de mise à jour reçu comprend en outre des informations liées à une localisation et/ou à une temporisation pour une communication ad hoc pour le premier équipement utilisateur, et dans lequel l'étape de détermination (330) comprend en outre la détermination (335) d'informations liées à une localisation et/ou à une temporisation pour une communication ad hoc entre le premier équipement utilisateur et l'au moins un autre équipement utilisateur, et l'étape de transmission (340) comprend la transmission d'un message comprenant également les informations liées à une localisation et/ou à une temporisation déterminées pour une communication ad hoc.

6. Nœud de réseau (500) configuré pour prendre en charge une mise en réseau ad hoc entre des équipements utilisateur, UE, d'un réseau cellulaire, dans lequel le nœud de réseau est capable d'accéder à une base de données de capacité d'équipement utilisateur (501) et comprend :
- un récepteur (502) configuré pour recevoir un message de mise à jour comprenant des informations concernant une capacité d'un premier équipement utilisateur (550),
- une unité de mise à jour (503) configurée pour mettre à jour la base de données de capacité d'équipement utilisateur (501) avec les informations comprises dans le message de mise à jour reçu, dans lequel la base de données de capacité d'équipement utilisateur comprend des identités de tous les UE qui veulent former les réseaux ad hoc dans une zone prise en charge par le nœud de réseau et des informations correspondantes de capacités d'UE,
- une unité de détermination (504) configurée pour déterminer une identité d'au moins un autre équipement utilisateur avec lequel le premier équipement utilisateur est capable de communiquer sans fil, en déterminant des UE compatibles dans la zone de desserte en faisant correspondre les informations de capacité des UE stockées dans la base de données de capacité d'équipement utilisateur, dans lequel les UE compatibles comprennent différents niveaux de compatibilité, et dans lequel les UE compatibles sont lesdits autres équipements utilisateur au moins uniques qui sont partiellement ou complètement compatibles en termes de capacités avec le premier équipement utilisateur, et
- un émetteur (505) configuré pour transmettre au premier équipement utilisateur et à l'au moins un autre équipement utilisateur un message comprenant l'identité déterminée de l'au moins un autre équipement utilisateur et l'identité de premier équipement utilisateur.

7. Nœud de réseau selon la revendication 6, dans lequel le récepteur (502) est configuré pour recevoir le message de mise à jour depuis le premier équipement utilisateur ou depuis un autre nœud de réseau.

8. Nœud de réseau selon l'une quelconque des revendications 6 ou 7, dans lequel l'identité comprend au moins l'une parmi : une identité physique, une identité globale, une identité unique, une identité temporaire, et une identité de groupe.

9. Nœud de réseau selon l'une quelconque des revendications 6 à 8, dans lequel l'émetteur (505) est configuré pour transmettre un message lorsque le nombre des autres équipements utilisateur au moins uniques avec lequel le premier équipement utilisateur est capable de communiquer sans fil, est plus grand qu'une valeur N.

10. Nœud de réseau selon l'une quelconque des revendications 6 à 9, dans lequel le message de mise à jour reçu comprend en outre des informations liées à une localisation et/ou à une temporisation pour une communication ad hoc pour le premier équipement utilisateur, et dans lequel l'unité de détermination (504) est en outre configurée pour déterminer des informations liées à une localisation et/ou à une temporisation pour une communication ad hoc entre le premier équipement utilisateur et l'au moins un autre équipement utilisateur, et l'émetteur (505) est configuré pour transmettre un message comprenant également les informations liées à une localisation et/ou à une temporisation déterminées pour une communication ad hoc.
